# EUROPEAN PATENT SPECIFICATION

(11) **EP 4 448 672 B1**
(45) Date of publication and mention of the grant of the patent: **28.05.2025**
(21) Application number: 22830295.6
(22) Date of filing: 18.11.2022
(51) Int. Cl.: C09J 133/06, C09J 133/24, C09J 4/00

(54) **CURABLE PRECURSOR OF AN ADHESIVE COMPOSITION**
HÄRTBARER VORLÄUFER EINER KLEBSTOFFZUSAMMENSETZUNG
PRÉCURSEUR DURCISSABLE D'UNE COMPOSITION ADHÉSIVE

(30) Priority: 14.12.2021 US 202163289552 P
(43) Date of publication of application: 23.10.2024
(73) Proprietor: 3M Innovative Properties Company, Saint Paul, Minnesota 55133-3427 (US)
(72) Inventor: KOSEKI, Daiki, Tokyo 141-8684 (JP); DANJO, Takahiro, Tokyo 141-8684 (JP); TASAKA, Yoshihiko, Tokyo 141-8684 (JP); THOMPSON, Zachary J., Saint Paul, Minnesota 55133-3427 (US)
(74) Representative: Bergen, Katja
(86) International application number: PCT/IB2022/061143
(87) International publication number: WO 2023/111722

(56) References cited:
- EP-A1- 3 888 617
- WO-A1-2015/200007
- JP-A- 2006 188 627
- US-A1- 2015 038 630

## Description

### Technical Field

The present disclosure relates to a curable precursor of an adhesive composition comprising a radically (co)polymerizable compound, a vanadium compound, a beta-dicarbonyl compound, and a quaternary ammonium halide.

### Background

Curable compositions have been known for years as suitable for use in a variety of applications that include general-use industrial applications such as adhesives and coatings, as well as high-performance applications in the electronics industry such as, e.g., for sealing and bonding electronic components. With broadened use of curable compositions over the years, performance requirements have become more and more demanding with respect to, in particular, curing profile, adhesion performance, storage stability, handleability and processability characteristics, and compliance with environment and health requirements.

In electric motors such as electric motors for cars, the motor core is made by laminating steel sheets. Usually, lamination is carried out by bunching using dowels. Weaknesses of this method are the occurrence of iron loss due to electrical short-circuit in the laminated motor core, and insufficient strength of the laminated core especially when the steel sheets are relatively thin.

To overcome these weaknesses, a lamination method using an adhesive has been studied. Requirements for adhesives for this application are high adhesive strength, thin bond-line thickness for high fill factor of the laminated steel sheets in the motor core, fast curing for cost effective mass production of the motor core, and high temperature durability to withstand the heat generated in the motor in use.

To achieve fast curing speed, anaerobic adhesives comprising an accelerator have been used. Disadvantage of this type of adhesive are low adhesive strength at high temperature, and a tendency of curing failure to occur especially at the edges of the adhesive layer by presence of air.

To achieve high adhesive strength, one-part thermosetting epoxy adhesive has been used. This type of adhesive requires a heating process which is undesired. Also, two-part epoxy or acrylic adhesives have been used. This type of adhesive requires a mixing step, leading to a long time to achieve the strength necessary for further handling.

WO 2016/053877 A1 discloses a method of curing a curable composition, the curable composition comprising a free-radically polymerizable compound, a quaternary ammonium halide, and a polyvalent metal compound for free-radically curing the curable composition. The polyvalent metal compound comprises a copper(II) compound, an iron(II or III) compound, a cobalt(II or III) compound, or a manganese (III or III) compound. For curing of the curable composition, a substrate having a solid primer layer disposed on it is contacted with the curable composition, the solid primer layer comprising a binder material and an organic peroxide. Disadvantages of this method are the long process time due to the need of a primer layer which typically needs to be dried for 30 minutes, and the relatively long curing time of from 30 minutes to 24 hours.

US 6,552,140 B1 discloses an air-activatable polymerizable composition comprising a free-radically polymerizable monomer, an activator system for polymerization of the free-radically polymerizable monomer, a soluble ionic salt, and a weak acid or latent weak acid, wherein said activator system comprises an auto-oxidizable compound which is a beta diketone. The air-activatable composition does not contain a peroxide, or a peroxide precursor which produces peroxide in the absence of air, or any ingredient which is a significant source of radicals in the absence of air. WO2015/200007A1 discloses a curable adhesive precursor composition comprising a radically copolymerizable compound, a beta-dicarbonyl compound and a nitro compound. In the examples, a two-part adhesive composition is disclosed, having one part A comprising an a methacrylate monomer, a beta-dicarbonyl compound, and a nitro compound; and a part B comprising methacrylate monomers, benzyltributylammonium chloride and copper (II) naphtenate.

There is still a need for a curable precursor of an adhesive composition that achieves rapid handling strength without sacrificing the ultimate adhesive strength of the adhesive composition, i.e., that achieves a balance of giving adhesive strength very quickly while still having good final performance.

As used herein, "a", "an", "the", "at least one" and "one or more" are used interchangeably. The term "comprise" shall include also the terms "consist essentially of" and "consists of".

### Summary

In a first aspect, the present disclosure relates to a curable precursor of an adhesive composition, wherein the curable precursor comprises
(a) a radically (co)polymerizable compound,
(b) a vanadium compound,
(c) a beta-dicarbonyl compound, and
(d) a quaternary ammonium halide.

The curable precursor disclosed herein may comprise a first part and a second part, wherein the first part comprises the radically (co)polymerizable compound, and wherein either
(i) the first part comprises the vanadium compound and the quaternary ammonium halide, and the second part comprises the beta-dicarbonyl compound; or
(ii) the first part comprises the beta-dicarbonyl compound and the second part comprises the vanadium compound and the quaternary ammonium halide.

In another aspect, the present disclosure also relates to a method of curing the curable precursor of an adhesive composition as disclosed herein, the method comprising
providing a curable precursor comprising a first part and a second part as disclosed herein;
providing a first substrate having a contact surface and a second substrate having a contact surface;
applying the first part of the curable precursor on at least a portion of the contact surface of the first substrate;
applying the second part of the curable precursor on at least a portion of the contact surface of the second substrate;
contacting the first part of the curable precursor on the contact surface of the first substrate with the second part of the curable precursor on the contact surface of the second substrate; thereby causing curing of the curable precursor of the adhesive composition.

The curable precursor disclosed herein allows a fast curing. The fast curing enables the use of the curable precursor for applications in cost effective mass production such as lamination of steel sheets for the motor core of electric motors, e.g., of cars.

The curable precursor disclosed herein has a good handling strength already after short curing times. By "a good handling strength" it is meant that the bond can be moved without the two substrates moving independently. Handling strength can be tested by hanging a 3 kg weight producing a 0.1 MPa stress on the bond and checking to see if the bond holds for at least 10 seconds. In some embodiments, the curable precursor disclosed herein can withstand a shear stress of 0.1 MPa or higher at room temperature (23 °C) after a curing time of only 30 seconds.

The curable precursor disclosed herein can be cured at room temperature. For curing, additional means such as UV light or heat are not required.

For curing of the curable precursor disclosed herein, no separate mixing step of the first and the second part of the curable precursor is required. The first part of the curable precursor is applied on the contact surface of the first substrate to be joined, and the second part of the curable precursor is applied on the contact surface of the second substrate to be joined, and curing is caused by contacting the first part of the curable precursor on the contact surface of the first substrate with the second part of the curable precursor on the contact surface of the second substrate. The curing does not start until the first and second substrate are brought together, and upon mating, the two parts are mixed spontaneously by diffusion and are cured to provide the bond strength. The curable precursor can be cured substantially uniformly without any physically mixing process.

The curable precursor disclosed herein allows a thin bond-line thickness which is important for a high fill factor of the laminated steel sheets in the motor core.

The curable precursor disclosed herein has a good high-temperature stability and durability which is required to withstand the heat generated in the motor in use.

The curable precursor disclosed herein has a high adhesive strength. In some embodiments, the curable precursor disclosed herein has a high adhesive strength of 2 MPa or higher at 180 °C which can be obtained already after a curing time of 48 hours.

The curable precursor disclosed herein has an air-activated initiator which generates a peroxide in situ. The initiator comprises a beta-dicarbonyl compound and a vanadium compound. By the air-activated initiator, the tendency of curing failure especially at the edges of the adhesive layer is reduced.

### Detailed Description

Disclosed herein is a curable precursor of an adhesive composition, wherein the curable precursor comprises
(a) a radically (co)polymerizable compound,
(b) a vanadium compound,
(c) a beta-dicarbonyl compound, and
(d) a quaternary ammonium halide.

A "curable precursor" is meant to designate a composition which can be cured using an initiator.

A "radically (co)polymerizable compound" is meant to designate a compound which can be cured using an initiator containing or able to produce a free radical. A radically (co)polymerizable compound may contain only one, two, three or more radically polymerizable groups. Typical examples of radically (co)polymerizable groups include unsaturated carbon groups, such as a vinyl group being present e.g. in a (meth)acrylate group.

As used herein, "(co)polymerizable" is a shorthand term referring to "polymerizable" and/or "copolymerizable".

The vanadium compound is not particularly limited as long as it is stable (as a solution or dispersion) in the curable precursor, i.e., does not settle to the bottom and is well mixed throughout to ensure even and consistent cure of the adhesive composition. Suitable vanadium compounds for use herein are vanadyl acetylacetonate, vanadium acetylacetonate, vanadium oxide acetylacetonate, vanadyl oxalate, vanadium chloride, vanadium oxide, and vanadium sulfate.

Preferably, the vanadium compound comprises vanadyl acetylacetonate.

The quaternary ammonium halide that is comprised in the curable precursor is at least partially soluble in the curable composition. The quaternary ammonium halide should remain well distributed throughout the curable precursor to ensure consistent, full cure of the curable precursor. The quaternary ammonium halide may improve the extent of cure of the adhesive composition.

Suitable quaternary ammonium halides include those having four hydrocarbyl (e.g., alkyl, alkenyl, cycloalkyl, aralkyl, alkaryl, and/or aryl) groups. Preferably, the hydrocarbyl groups are independently selected from hydrocarbyl groups having from 1 to 18 carbon atoms, more preferably 1 to 12 carbon atoms, and more preferably 1 to 4 carbon atoms. Examples of suitable hydrocarbyl groups include methyl, ethyl, propyl, butyl, hexyl, octyl, dodecyl, hexadecyl, and octadecyl, benzyl, phenyl, tolyl, cyclohexyl, and methylcyclohexyl. Exemplary suitable quaternary ammonium compounds include tetramethylammonium halides, tetraethylammonium halides, tetrapropylammonium halides, tetrabutylammonium halides, ethyltrimethylammonium halides, diethyldimethylammonium halides, trimethylbutylammonium halides, trioctylmethylammonium halides, and benzyltributylammonium halides. Any halide (e.g., F, Cl, Br, I) ion may be used in the quaternary ammonium halide, but preferably the halide ion is chloride or bromide, more preferably chloride.

**In** some embodiments, trioctylmethylammonium chloride is used as quaternary ammonium halide.

The curable precursor disclosed herein may comprise from 0.01 to 5 percent by weight, preferably 0.1 to 2 percent by weight, of the quaternary ammonium halide, based on the total weight of the curable precursor.

The curable precursor disclosed herein typically comprises a first part and a second part. The first part comprises the radically (co)polymerizable compound. The vanadium compound, the beta-dicarbonyl compound, and the quaternary ammonium halide are distributed among the first and the second part of the curable precursor according to one of the two following options:
Either
(i) the first part comprises the vanadium compound and the quaternary ammonium halide, and the second part comprises the beta-dicarbonyl compound; or
(ii) the first part comprises the beta-dicarbonyl compound and the second part comprises the vanadium compound and the quaternary ammonium halide.

This means that the vanadium compound and the beta-dicarbonyl compound are in different parts of the curable precursor, and also the quaternary ammonium chloride and the beta-dicarbonyl compound are in different parts of the curable precursor.

In some preferred embodiments, the vanadium compound, the beta-dicarbonyl compound, and the quaternary ammonium halide are distributed among the first and the second part of the curable precursor according to option (i), i.e., the first part comprises the vanadium compound and the quaternary ammonium halide, and the second part comprises the beta-dicarbonyl compound.

The second part of the curable precursor preferably further comprises
(e) an initiator for radically (co)polymerizing the radically (co)polymerizable compound.

The term "initiator" is meant to refer to a substance or a group of substances able to start or initiate or contribute to the curing process of the curable precursor, i.e., to start or initiate or contribute to the radical (co)polymerization of the radically (co)polymerizable compound.

The vanadium compound and the beta-dicarbonyl compound comprised in the curable precursor are able to form a peroxide initiator in situ, i.e., after contacting the vanadium compound and the beta-dicarbonyl compound which are comprised in two different part of the curable precursor. After contacting the vanadium compound and the beta-dicarbonyl compound, air-activated curing starts by in-situ forming of a peroxide which has the function of an initiator for radically (co)polymerizing the radically (co)polymerizable compound. In some embodiments of the curable precursor, the curable precursor comprises an additional initiator (e) for radically (co)polymerizing the radically (co)polymerizable compound. The initiator (e) is comprised in the curable precursor in addition to the initiator which is formed in-situ by reaction between the vanadium compound and the beta-dicarbonyl compound. The additional initiator (e) is comprised in the second part of the curable precursor. By adding an initiator (e), the cure time may be decreased.

The additional initiator (e) may be an organic peroxide.

The organic peroxide may be a mono- or multi-functional carboxylic acid peroxyester. Commercially available organic peroxides include, for example, t-alkyl esters of peroxycarboxylic acids, t-alkyl esters of monoperoxydicarboxylic acids, di(t-alkyl) esters of diperoxydicarboxylic acids, alkylene diesters of peroxycarboxylic acids, dialkyl peroxydicarbonates, and O,O-t-alkyl O-alkyl diesters of monoperoxycarbonic acid. Examplary organic peroxides include diisopropyl peroxydicarbonate, t-butyl peroxyneodecanoate, t-amyl peroxyneodecanoate, maleic acid t-butyl monoperoxyester, t-butyl peroxybenzoate, t-butyl peroxy-2-ethylhexanoate, t-amyl peroxy-2-ethylhexanoate, O-isopropyl O,O-t-butyl monoperoxycarbonate, dicyclohexyl peroxycarbonate, dimyristyl peroxycarbonate, dicetyl peroxycarbonate, di(2-ethylhexyl) peroxycarbonate, O,O-t-butyl O-2-ethylhexyl peroxycarbonate, t-butyl peroxy-3,5,5-trimethylhexanoate, t-amyl peroxybenzoate, t-butyl peroxyacetate, di(4-t-butylcyclohexyl) peroxycarbonate, cumyl peroxyneodecanoate, t-amyl peroxypivalate, cumene hydroperoxide, dibenzoyl peroxide, and t-butyl peroxypivalate. Further suitable organic peroxides will be known to one of ordinary skill in the art.

A preferred additional initiator (e) is cumene hydroperoxide.

Typically, the amount of additional initiator (e) is from 0.1 to 20 percent by weight, preferably 0.2 to 10 percent by weight, and more preferably from 0.3 to 5 percent by weight, based on the total weight of the curable precursor.

The curable precursor comprises at least one radically (co)polymerizable compound. Useful radically (co)polymerizable compounds may comprise an ethylenically-unsaturated compound having one or more (e.g., one, two, three, four, or more) radically (co)polymerizable groups.

The radically (co)polymerizable compound of the curable precursor disclosed herein may comprise at least one of (meth)acrylates, (meth)acrylamides, other vinyl compounds, and combinations thereof.

As used herein, "(meth)acrylate" is a shorthand term referring to "acrylate" and/or "methacrylate". For example, a "(meth)acrylamide" refers to "acrylamide" and/or "methacrylamide".

Preferably, the radically (co)polymerizable compound of the curable precursor disclosed herein comprises a (meth)acrylate. The (meth)acrylate may be a monomer, an oligomer, or a polymer.

A "monomer" is any chemical substance which can be characterized by a chemical formula, bearing radically polymerizable unsaturated groups (including (meth)acrylate groups) which can be polymerized to oligomers or polymers thereby increasing the molecular weight. The molecular weight of monomers can usually simply be calculated based on the chemical formula given.

"Polymer" or "polymeric material" are used interchangeably to refer to a homopolymer, copolymer, terpolymer etc.

In some embodiments, the radically (co)polymerizable compound comprises a (meth)acrylate having a functionality of more than 1.

In some embodiments, the radically (co)polymerizable compound comprises a (meth)acrylate having a functionality of at least 2.

In some embodiments, the radically (co)polymerizable compound comprises a (meth)acrylate having a functionality of at least 3.

With "a functionality of 1" it is meant that the (meth)acrylate is a monofunctional (meth)acrylate. With "a functionality of 2" it is meant that the (meth)acrylate is a difunctional (meth)acrylate. With "a functionality of 3" it is meant that the (meth)acrylate is a trifunctional (meth)acrylate. A "monofunctional (meth)acrylate" is meant to designate a (meth)acrylate compound having one (meth)acryloyl functional group (which has the structure H2C=CH-C(=O)- and may also be referred to as "(meth)acrylyl" or simply as "(meth)acryl" functional group). A "difunctional (meth)acrylate" is meant to designate a (meth)acrylate compound having two (meth)acryloyl functional groups. A "trifunctional (meth)acrylate" is meant to designate a (meth)acrylate compound having three (meth)acryloyl functional groups.

With "a functionality of more than 1" it is meant that the functionality of the (meth)acrylate is more than 1, i.e., the functionality may be 2 or 3, or a non-integer of more than 1 and less than 2, or a non-integer of more than 2 and less than 3, or a non-integer of more than 3. An example for a (meth)acrylate having a non-integer functionality is a (meth)acrylate being an oligomer with (meth)acrylate side chains with an average of 2.3 side chains per oligomer (i.e., with some of the oligomer molecules having 2 side chains and some other of the oligomer molecules having 3 side chains, and with an average of 2.3 side chains for all oligomer molecules). This oligomer is a (meth)acrylate having a functionality of 2.3, as it has an average of 2.3 (meth)acryloyl functional groups.

With "a functionality of at least 2" it is meant that the functionality of the (meth)acrylate is 2 or more, i.e., the functionality may be 2 or 3, or a non-integer of more than 2 and less than 3, or a non-integer of more than 3.

With "a functionality of at least 3" it is meant that the functionality of the (meth)acrylate is 3 or more, i.e., the functionality may be 3 or a non-integer of more than 3.

Examples of suitable monofunctional (meth)acrylates include 1,6-hexanediol (meth)acrylate, 2-phenoxyethyl (meth)acrylate, allyl (meth)acrylate, ethyl (meth)acrylate, 2-ethylhexyl (meth)acrylate, octyl (meth)acrylate, nonyl (meth)acrylate, decyl (meth)acrylate, lauryl (meth)acrylate, tridecyl (meth)acrylate, isobornyl (meth)acrylate, isopropyl (meth)acrylate, methyl (meth)acrylate, n-hexyl (meth)acrylate, stearyl (meth)acrylate, tetrahydrofurfuryl (meth)acrylate, and dicyclopentadienyl (meth)acrylate.

Examples of suitable difunctional (meth)acrylates include 1,3-butylene glycol di(meth)acrylate, 1,3-propanediol di(meth)acrylate, 1,4-butanediol di(meth)acrylate, 1,4-cyclohexanediol di(meth)acrylate, 1,6-hexanediol di(meth)acrylate, alkoxylated cyclohexanedimethanol di(meth)acrylates, alkoxylated hexanediol di(meth)acrylate, alkoxylated neopentyl glycol di(meth)acrylate, bis[1-(2-(meth)acryloxy)]-p-ethoxyphenyldimethylmethane, bis[1-(3-(meth)acryloxy-2-hydroxy)]-p-propoxyphenyldimethylmethane, caprolactone modified neopentyl glycol hydroxypivalate di(meth)acrylate, cyclohexanedimethanol di(meth)acrylate, diethylene glycol di(meth)acrylate, dipropylene glycol di(meth)acrylate, ethoxylated (10) bisphenol A di(meth)acrylate, ethoxylated (3) bisphenol A di(meth)acrylate, ethoxylated (4) bisphenol A di(meth)acrylate, ethoxylated bisphenol A di(meth)acrylate, ethylene glycol di(meth)acrylate, hydroxypivalaldehyde modified trimethylolpropane di(meth)acrylate, neopentyl glycol di(meth)acrylate, polyethylene glycol (200) di(meth)acrylate, polyethylene glycol (400) di(meth)acrylate, polyethylene glycol (600) di(meth)acrylate, propoxylated neopentyl glycol di(meth)acrylate, tetraethylene glycol di(meth)acrylate, tricyclodecanedimethanol di(meth)acrylate, triethylene glycol di(meth)acrylate, and tripropylene glycol di(meth)acrylate.

Examples of suitable trifunctional (meth)acrylates include 1,2,4-butanetriol tri(meth)acrylate, ethoxylated (20) trimethylolpropane tri(meth)acrylate, ethoxylated (3) trimethylolpropane tri(meth)acrylate, ethoxylated (30) bisphenol A di(meth)acrylate, ethoxylated (6) trimethylolpropane tri(meth)acrylate, ethoxylated (9) trimethylolpropane tri(meth)acrylate, glycerol tri(meth)acrylate, pentaerythritol tri(meth)acrylate, propoxylated (3) glyceryl tri(meth)acrylate, propoxylated (3) trimethylolpropane tri(meth)acrylate, propoxylated (5,5) glyceryl tri(meth)acrylate, propoxylated (6) trimethylolpropane tri(meth)acrylate, trimethylolpropane tri(meth)acrylate, and tris(2-hydroxyethyl) isocyanurate tri(meth)acrylate.

Examples of suitable (meth)acrylates having a functionality greater than 3 include dipentaerythritol penta(meth)acrylate, ditrimethylolpropane tetra(meth)acrylate, ethoxylated (4) pentaerythritol tetra(meth)acrylate, pentaerythritol tetra(meth)acrylate, sorbitol hexa(meth)acrylate, and caprolactone modified dipentaerythritol hexa(meth)acrylate.

Examples of suitable monofunctional (meth)acrylamides include N,N-dimethylacrylamide, N-vinylpyrrolidone, N-vinylcaprolactam, diacetone (meth)acrylamide, and (meth)acryloylmorpholine.

An example of a suitable difunctional (meth)acrylamide is methylene bis(meth)acrylamide.

Oligomers of the (meth)acrylate and (meth)acrylamide monomers may also be used.

Further examples of suitable (meth)acrylates include monomers and oligomers of unsaturated carboxylic acids such as (meth)acrylic acid and aromatic (meth)acrylated acids (e g., methacrylated trimellitic acids). Acrylic acid and methacrylic acid are examples of monofunctional (meth)acrylates.

In some embodiments, the curable precursor comprises methacrylic acid. The amount of methacrylic acid may be from 10 to 50 percent by weight, based on the total amount of the curable precursor.

Examples of suitable radically (co)polymerizable vinyl compounds include styrene, dialkyl phthalate, divinyl succinate, divinyl adipate, and divinyl phthalate. Other suitable radically (co)polymerizable compounds include siloxane-functional (meth)acrylates as disclosed, for example, in PCT Published Application Nos. WO 00/38619 (Guggenberger et al.), WO 01/92271 (Weinmann et al.), WO 01/07444 (Guggenberger et al.), WO 00/42092 (Guggenberger et al.), and fluoropolymer-functional (meth)acrylates as disclosed, for example, in U.S. Pat. Nos. 5,076,844 (Fock et al.), 4,356,296 (Griffith et al.), EP 0 373 384 (Wagenknecht et al.), EP 0 201 031 (Reiners et al.), and EP 0201 778 (Reiners et al.).

Suitable radically (co)polymerizable compounds may contain hydroxyl groups and radically active functional groups in a single molecule. Examples of such material include hydroxyalkyl (meth)acrylates such as 2-hydroxyethyl (meth)acrylate, 4-hydroxybutylate, poly(propyleneglycol) (meth)acrylate, 2-hydroxypropyl (meth)acrylate, glycerol mono- or di-(meth)acrylate, trimethylolpropane mono- or di-(meth)acrylate, pentaerythritol mono-, di-, and tri-(meth)acrylate, sorbitol mono-, di-, tri-, tetra-, or penta-(meth)acrylate, and 2,2-bis[4-(2-hydroxy-3-methyacryloxypropoxy)phenyl]propane (Bis-GMA).

Suitable radically (co)polymerizable compounds are available from a wide variety of commercial sources such as, for example, Sartomer Co., Exton, Pennsylvania, or can be made by known methods.

Typically, the curable precursor includes a sufficient quantity of radically (co)polymerizable compound(s) to provide the desired hardening or curing rate and desired overall properties following curing/hardening. Mixtures of radically (co)polymerizable compounds can be used if desired.

The curable precursor disclosed herein may comprise at least 20 percent by weight of the radically (co)polymerizable compound, based on the total weight of the curable precursor.

Typically, the amount of the radically (co)polymerizable compound is from 20 to 99.9 percent by weight, or from 25 to 98 percent by weight, or from 25 to 95 percent by weight of the curable precursor, based on the total weight of the curable precursor.

In some embodiments, the amount of the radically (co)polymerizable compound is from 75 to 99.9 percent by weight, preferably 80 to 98 percent by weight, and more preferably from 85 to 95 percent by weight of the curable precursor, based on the total weight of the curable precursor.

The curable precursor disclosed herein may comprise at least 20 percent by weight of the (meth)acrylate, based on the total weight of the curable precursor.

The amount of the (meth)acrylate may be from 20 to 99.9 percent by weight, or from 25 to 98 percent by weight, or from 25 to 95 percent by weight of the curable precursor, based on the total weight of the curable precursor.

In some embodiments, the amount of the (meth)acrylate is from 75 to 99.9 percent by weight, preferably 80 to 98 percent by weight, and more preferably from 85 to 95 percent by weight of the curable precursor, based on the total weight of the curable precursor.

The curable precursor may comprise at least 30, preferably at least 35 percent by weight of the (meth)acrylate having a functionality of more than 1, based on the total weight of the radically (co)polymerizable compound. In some embodiments, the curable precursor comprises at least 40, or at least 45, or at least 50 percent by weight of the (meth)acrylate having a functionality of more than 1, based on the total weight of the radically (co)polymerizable compound.

The curable precursor may comprise at least 30, preferably at least 35 percent by weight of the (meth)acrylate having a functionality of at least 2, based on the total weight of the radically (co)polymerizable compound. In some embodiments, the curable precursor comprises at least 40, or at least 45, or at least 50 percent by weight of the (meth)acrylate having a functionality of at least 2, based on the total weight of the radically (co)polymerizable compound.

The curable precursor may comprise at least 30, preferably at least 35 percent by weight of the (meth)acrylate having a functionality of at least 3, based on the total weight of the radically (co)polymerizable compound. In some embodiments, the curable precursor comprises at least 40, or at least 45, or at least 50 percent by weight of the (meth)acrylate having a functionality of at least 3, based on the total weight of the radically (co)polymerizable compound.

In some embodiments, the curable precursor comprises from 30 to 100 percent by weight of the (meth)acrylate having a functionality of at least 3, based on the total weight of the radically (co)polymerizable compound. Preferably, the curable precursor comprises from 30 to 80 percent by weight of the (meth)acrylate having a functionality of at least 3, based on the total weight of the radically (co)polymerizable compound. More preferably, the curable precursor comprises from 30 to 60 percent by weight of the (meth)acrylate having a functionality of at least 3, based on the total weight of the radically (co)polymerizable compound.

The vanadium compound may be added to the curable precursor in any efficacious amount. Typically, the curable precursor disclosed herein comprises from 0.0005 to 1.0 percent by weight of the vanadium compound, based on the total weight of the curable precursor. In some embodiments, the curable precursor disclosed herein comprises at least 0.01 or at least 0.02, or at least 0.05, or at least 0.1 percent by weight of the vanadium compound, based on the total weight of the curable precursor. Preferably, the curable precursor disclosed herein comprises at least 0.01 and up to 0.5 percent by weight, and more preferably at least 0.02 and up to 0.5 percent by weight, of the vanadium compound, based on the total weight of the curable precursor.

The beta-dicarbonyl compound used for the curable precursor disclosed herein may be represented by the formula 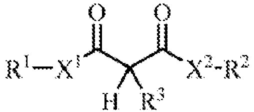 or may be a salt thereof, wherein:
X¹ and X² independently represent a covalent bond, O, S, 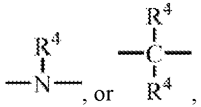
wherein each R⁴ independently represents hydrogen or alkyl having from 1 to 18 carbon atoms,
R¹ and R² independently represent a hydrocarbyl or substituted hydrocarbyl group having from 1 to 18 carbon atoms,
R³ represents hydrogen, or a hydrocarbyl or substituted hydrocarbyl group having from 1 to 18 carbon atoms,
or taken together any two of R¹, R², or R³ form a five-membered or six-membered ring.

Preferably, R¹ and R² each have from 1 to 12 carbon atoms, more preferably 1 to 8 carbon atoms, and even more preferably 1 to 4 carbon atoms. Exemplary groups R¹ and R² include methyl, ethyl, isopropyl, n-propyl, butyl pentyl, hexyl, octyl, decyl, dodecyl, hexadecyl, and octadecyl. Generally, the nature of the substituents in the substituted hydrocarbyl groups (which may be mono-substituted or polysubstituted) is not particularly important, except that substituents that interfere with the radical polymerization should be used sparingly or excluded altogether. Exemplary substituted hydrocarbyl groups include hydroxyhydrocarbyl groups (e.g., hydroxyethyl and hydroxypropyl), alkoxyhydrocarbyl groups (e.g., methoxyethyl and methoxyethoxy), alkanoylhydrocarbyl groups (e.g., acetylethyl and benzoylethyl), haloalkyl groups (e.g., chloroethyland dichloropropyl), and dialkylaminohydrocarbyl groups (e.g., dimethylaminopropyl and diethylaminoethyl).

In some embodiments, any two of R¹, R², and R³ taken together form a five-membered or six-membered ring. In those embodiments, two of R¹, R², and R³ taken together may represent, for example: a divalent group selected from 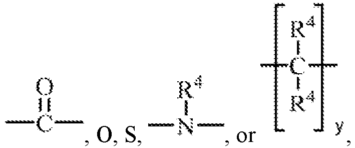 and combinations thereof, wherein each R⁴ independently represents H or an alkyl group having from 1 to 18 carbon atoms (preferably an alkyl group having from 1 to 12 carbon atoms, more preferably from 1 to 8 carbon atoms, and more preferably from 1 to 4 carbon atoms), and y is 1, 2 or 3. For example, the beta-dicarbonyl compound may be 2,2-dimethyl-1,3-dioxane-4,6-dione (Meldrum's acid). Examplary R⁴ groups include hydrogen, methyl, ethyl, isopropyl, n-propyl, butyl, pentyl, hexyl, octyl, decyl, dodecyl, hexadecyl, and octydecyl. Examples of divalent groups formed by two of R¹, R², and R³ taken together - include alkylene, alkyleneoxy, oxycarbonyloxy, carbonylalkylene, alkylenecarbonyloxy, alkyleneoxycarbonyl, alkylene(alkyl)amino, and dialkylene(alkyl)amino. If R¹ and R² taken together form a 5-membered ring, then at least one of X¹ or X² is a covalent bond.

R³ may represent hydrogen or a hydrocarbyl group having from 1 to 18 carbon atoms. Examplary groups R³ include methyl, ethyl, isopropyl, n-propy, butyl, pentyl, hexyl, octyl, decyl, dodecyl, hexydecyl, phenyl, cyclohexyl, methylcyclohexyl, and octadecyl. Exemplary substituted hydrocarbyl groups R³ include -CH₂C(=O)OR⁴ wherein R⁴ is as previously defined (e.g., R⁴ may be H, methyl, ethyl, dodecyl, or octadecyl).

Each of X¹ and X² independently represents a covalent bond, O, S, 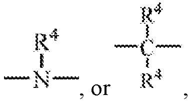 wherein R⁴ is as described above.

In some embodiments, the beta-dicarbonyl compound comprises barbituric acid (i.e., R³ = H, both of X¹ and X² = 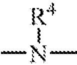 wherein R⁴ = H, and taken together R¹ and R² = carbonyl) or a derivative thereof (e.g., a 1,3-dialkylbarbituric acid). Examples of suitable barbituric acid derivatives include 1,3,5-trimethylbarbituric acid, 1,3,5-triethylbarbituric acid, 1,3-dimethyl-5-ethylbarbituric acid, 1,5-dimethylbarbituric acid, 1-methyl-5-ethylbarbituric acid, 1-methyl-5-propylbarbituric acid, 5-ethylbarbituric acid, 5-propylbarbituric acid, 5-butylbarbituric acid, 1-benzyl-5-phenylbarbituric acid, and 1-cyclohexyl-5-ethylbarbituric acid.

In some embodiments, the beta-dicarbonyl compound comprises a dialkyl 2-acetylsuccinate diester having from 8 to 14 carbon atoms, preferably from 8 to 12 carbon atoms, and more preferably 8 to 10 carbon atoms. The dialykl 2-acetylsuccinate diester may be substituted or unsubstituted. Examples include dimethyl 2-acetylsuccinate (dimethyl acetylsuccinate), diethyl 2-acetylsuccinate, and methyl ethyl 2-acetylsuccinate.

Useful salts of beta-dicarbonyl compounds may include alkali metal (e.g., lithium, sodium, potassium, or cesium) salts, NH₄⁺ salts, and 1°, 2°, 3°, and 4° (i.e., primary, secondary, tertiary, and quaternary) organoammonium salts, preferably having from 1 to 24 carbon atoms. Examples include tetrabutylammonium, dibenzyldimethylammonium, benzyltributylammonium, and tetraethylammonium salts.

The curable precursor disclosed herein may comprise from 0.05 to 20 percent by weight, preferably 0.1 to 10 percent by weight, of the beta-dicarbonyl compound, based on the total weight of the curable precursor.

In some embodiments of the curable precursor disclosed herein, the first part of the curable precursor further comprises a monofunctional (meth)acrylate, i.e., a (meth)acrylate having a functionality of 1.

The amount of the monofunctional (meth)acrylate may be from 20 to 80 percent by weight, preferably from 30 to 70 percent by weight, more preferably from 40 to 60 percent by weight, based on the total weight of the radically (co)polymerizable compound.

The curable precursor disclosed herein may further comprise a hydrophobic solvent.

For the hydrophobic solvent, any hydrophobic solvent that does not react with the beta-dicarbonyl compound and with the additional initiator (e) may be used. Suitable hydrophobic solvents are paraffins such as liquid paraffins, and ether acetates such as diethylene glycol monobutyl ether acetate (CAS No. 124-17-4). Also plasticizers such as plasticizers based on dipropylene glycol dibenzoate (e.g., Benzoflex 9-88, available from Eastman Chemical Company, Kingsport, TN, USA) may be used as hydrophobic solvent.

The hydrophobic solvent can be used as a non-reactive diluent for the components of the curable precursor, such as the beta-dicarbonyl compound and the initiator if present. The hydrophobic solvent can migrate to the surface of the curable precursor to prevent oxygen inhibition of the polymerization of the radically (co)polymerizable compound of the curable precursor.

The hydrophobic solvent may be present in the first part or in the second part of the curable precursor. The hydrophobic solvent may also be present in both the first part and the second part of the curable precursor.

The amount of hydrophobic solvent present in the curable precursor may be up to 70 percent by weight, based on the total weight of the curable precursor. Typically, the amount of hydrophobic solvent is at most 20, or at most 10 percent by weight, based on the total weight of the curable precursor.

The curable precursor disclosed herein may further comprise a thixotropic agent. The thixotropic agent may be comprised in the first part or in the second part of the curable precursor. The thixotropic agent may also be comprised in the first and in the second part of the curable precursor. The thixotropic agent may help to control the rheological properties of the precursor, e.g., how thick it coats the substrate. An example of a useful thixotropic agent is hydrophilic fumed silica.

The curable precursor disclosed herein may optionally include additives such as, for example, one or more fillers, antioxidants, plasticizers, tackifiers, thickeners, fragrances, hindered amine light stabilizers (HALS), UV stabilizers, inhibitors (e.g., which may accompany radically polymerizable compounds), coating aids, coupling agents, toughening agents, or a combination thereof. Examples of fillers include silica, clays, and surface modified clays. Exemplary toughening agents include elastomeric materials such as various synthetic rubbers (e.g., methyl methacrylate-butadiene-styrene (MBS) copolymers, acrylonitrile-butadiene-styrene (ABS) copolymers, linear polyurethanes, acrylonitrile-butadiene rubbers, styrene-butadiene rubbers, chloroprene rubbers, butadiene rubbers, and natural rubbers. Among them, acrylonitrile-butadiene rubbers are particularly useful because of their typically good solubility in the curable precursor. Tougheners may be used alone or in combination.

Further disclosed herein is a method of curing the curable precursor of an adhesive composition according to the present disclosure, the method comprising
providing a curable precursor comprising a first part and a second part according to the present disclosure;
providing a first substrate having a contact surface and a second substrate having a contact surface;
applying the first part of the curable precursor on at least a portion of the contact surface of the first substrate;
applying the second part of the curable precursor on at least a portion of the contact surface of the second substrate; and
contacting the first part of the curable precursor on the contact surface of the first substrate with the second part of the curable precursor on the contact surface of the second substrate, thereby causing curing of the curable precursor of the adhesive composition.

The first and the second part of the curable precursor may be applied on the contact surface of the first or second substrate, respectively, by using any suitable conventional coating process technology.

The weight ratio of the amount of the first part to the amount of the second part applied on the contact surface of the first and second substrates may be from 20:1 to 1:1. Preferably, the weight ratio of the amount of the first part to the amount of the second part is from 15:1 to 5:1, more preferably from 12:1 to 8:1, and most preferably 10:1.

After applying the first and second part of the curable precursor on at least a portion of the contact surface of the first and second substrate, respectively, the first part of the curable precursor on the contact surface of the first substrate is contacted with the second part of the curable precursor on the contact surface of the second substrate. By this contact, curing of the curable precursor is caused. Typically, heating of the first and second part of the curable precursor while in contact with each other is not necessary.

After contacting the vanadium compound and the beta-dicarbonyl compound which are comprised in two different parts of the curable precursor, the vanadium compound and the beta-dicarbonyl compound comprised in the curable precursor form a peroxide initiator in situ when in the presence of air. The peroxide initiator initiates the radical (co)polymerization of the radically (co)polymerizable compound of the curable precursor.

The curing does not start until the first and second part of the curable precursor are brought together, and upon mating, the two parts of the curable precursor are mixed spontaneously by diffusion and are cured. The curable precursor can be cured substantially uniformly without any physically mixing process.

Curing may be carried out at a temperature below 50 °C, or at a temperature of at most 40 °C, or at most 30 °C, or at room temperature (23 °C). Preferably, curing is carried out at room temperature (23 °C).

Typically, after a curing time of 5 minutes at room temperature (23 °C), an adhesive composition having an adhesive strength of at least 0.1 MPa is obtained. Preferably, an adhesive strength of at least 0.1 MPa is obtained after a curing time of 3 minutes, 1 minute, or 0.5 minutes. The adhesive strength (overlap shear strength, OLS) of the cured composition after a curing time of at least 48 hours at room temperature (23 °C) may be at least 2 MPa, or at least 3 MPa, or at least 4 MPa, or at least 5 MPa, when measured according to the test method described in the experimental section. The curing time may be adjusted as desired depending on the targeted applications and manufacturing requirements.

The cured composition made by the process disclosed herein may have an overlap shear strength (OLS) in a range from 2.0 to 10.0 MPa, or from 2.0 to 8.0 MPa at room temperature (23 °C), when measured according to the test method described in the experimental section.

The cured composition made by the process disclosed herein may have an overlap shear strength (OLS) of at least 1.0 MPa, at least 1.5 MPa, at least 2.0 MPa, or at least 3.0 MPa at 180 °C, when measured according to the test method described in the experimental section.

The cured composition made by the process disclosed herein may have an overlap shear strength (OLS) in a range from 1.0 to 5.0 MPa, or from 2.0 to 5.0 MPa at 180 °C, when measured according to the test method described in the experimental section.

The curable precursor may comprise an additional initiator (e) for radically (co)polymerizing the radically (co)polymerizable compound, in addition to the initiator which is formed in situ by reaction between the vanadium compound and the beta-dicarbonyl compound. The additional initiator is comprised in the second part of the curable precursor. By adding an initiator, the cure time may be decreased.

The curable precursor disclosed herein can be used for laminating steel sheets for the motor core of electric motors, e.g., for vehicles such as cars. The curable precursor disclosed herein may also be used for electronic devices and display assembly.

### Examples

Unless otherwise noted or readily apparent from the context, all parts, percentages, ratios, etc. in the Examples are by weight.

### Materials Used in the Examples

| **Material** | **Description** |
|---|---|
| DCPDM | Dicyclopentadienyl methacrylate, available under the trade designation "FA-513M", from Showa Denko Materials Co, LTD, Tokyo, Japan. |
| MAA | Methacrylic acid, available from Mitsubishi Gas Chemical Company, INC., Tokyo, Japan. . |
| THEITA | Tris(2-hydroxyethyl) isocyanurate triacrylate, available under the trade designation "SR368", from Sartomer USA, LLC, Exton, PA. |
| VAA | Vanadyl acetylacetonate, available under the trade designation "Vanadyl acetylacetonate", from Shinko Chemical Co., Ltd., Osaka, Japan. . |
| CAA | Copper acetylacetonate, available under the trade designation "Copper (II) acetylacetonate", from Fujifilm Wako Pure Chemical Corporation, Osaka, Japan. |
| TOMAC | Trioctylmethyl ammonium chloride, available under the trade designation "MethylTrioctyl ammonium chloride", from Fujifilm Wako Pure Chemical Corporation, Osaka, Japan. . |
| LP | Liquid parrafin, available under the trade designation "Liquid parrafin", from Fujifilm Wako Pure Chemical Corporation, Osaka, Japan. |
| DMAS | Dimethyl acetylsuccinate is a beta-dicarbonyl compound, available under the trade designation "Dimethyl acetylsuccinate", from Fujifilm Wako Pure Chemical Corporation, Osaka, Japan. |
| CHyP | Cumene hydroperoxide, available under the trade designation "Percumyl H-80", from NOF Corporation, Tokyo, Japan. |

### Test Methods

### Overlap Shear Strength

The overlap shear strength testing of examples and comparative examples was conducted using SPCC-SB steel plates (cold rolled steel), available from Test Piece Co., Ltd., Kanagawa, Japan having dimensions 1.6 mm x 25 mm x 100 mm. The plates were wiped with isopropyl alcohol, to remove grease and/or particle contaminant from the surface. The area of overlap between two plates was 25 mm x 12.5 mm. Per the combinations shown in Table 3, approximately 30 mg of an Adhesive Precursor Composition - Part A (i.e., of the first part of a curable precursor of an adhesive composition) was dispersed on the surface of a first plate in the overlap area and, using a swab, a thin layer of approximately 3 mg of Adhesive Precursor Composition - Part B (i.e., of the second part of a curable precursor of an adhesive composition) was coated on the surface of a second plate in the overlap area. The two regions of the plates with adhesive precursors on them were then brought into contact with each other so that the Part A composition was in contact with the Part B composition. Two binder clips were used to hold the two plates together. The adhesive precursor composition between the plates was allowed to cure for two days at room temperature, forming an overlap shear sample specimen. Overlap shear strength testing was conducted using a conventional tensile testing machine (Tensilon universal testing machine RTC1325A, A&D Co., Ltd., Tokyo, Japan) by mounting the opposed plate ends of the overlap shear sample specimen in the clamps of the tensile testing machines and then applying a shear force to the specimen via a clamp extension rate of 5 mm/min. Results are shown in Table 3.

### Adhesive Precursor Compositions - Part A (PC-A1)

Adhesive precursor compositions were prepared according to the formulations shown in Table 1. Each composition was thoroughly mixed to obtain a uniform solution.

**Table 1: Adhesive Precursor Compositions - Part A (values in parts by weight).**

| Component | PC-A1 | PC-A2 | PC-A3 | PC-A4 | PC-A5 | PC-A6 | PC-A7 | PC-A8 |
|---|---|---|---|---|---|---|---|---|
| DCPDM | 30 | 20 | 10 | 0 | 10 | 10 | 10 | 10 |
| MAA | 10 | 10 | 10 | 10 | 10 | 10 | 10 | 10 |
| THEITA | 0 | 10 | 20 | 30 | 20 | 20 | 20 | 20 |
| VAA | 0.07 | 0.07 | 0.07 | 0.07 | 0.01 | 0.03 | - | 0.07 |
| CAA | - | - | - | - | - | - | 0.07 | - |
| TOMAC | 0.12 | 0.12 | 0.12 | 0.12 | 0.12 | 0.12 | 0.12 | - |
| LP | 0.67 | 0.67 | 0.67 | 0.67 | 0.67 | 0.67 | 0.67 | 0.67 |

### Adhesive Precursor Compositions - Part B (PC-B1)

Adhesive precursor compositions were prepared according to the formulations shown in Table 2. Each composition was thoroughly mixed to obtain a uniform solution.

**Table 2: Adhesive Precursor Compositions - Part B (values in parts by weight).**

| Component | PC-B1 | PC-B2 |
|---|---|---|
| LP | 76 | 76 |
| DMAS | 0.65 | - |
| CHyP | 7.8 | 7.8 |

### Examples 1 to 5 (Ex. 1 to Ex. 5) and Comparative Examples 6 to 9 (CE-6 to CE-9)

Examples and comparative examples were prepared for use in the Overlap Shear Strength test, previously described. Table 3 shows the PC-A and PC-B composition that were used to prepare each example and comparative example. Overlap Shear Strength results, at both room temperature (RT) and elevated temperature, 180°C, are also shown in Table 3.

**Table 3: Ex. 1 to Ex. 5, CE-1 to CE-4 and Overlap Shear Strength Results.**

| | Part A | Part B | Overlap Shear Strength (MPa) | |
|---|---|---|---|---|
| | | | RT | 180°C |
| Example 1 | PC-A2 | PC-B1 | 4.29 | 1.87 |
| Example 2 | PC-A3 | PC-B1 | 5.72 | 3.76 |
| Example 3 | PC-A4 | PC-B1 | 3.74 | 2.51 |
| Example 4 | PC-A5 | PC-B1 | 7.05 | 3.57 |
| Example 5 | PC-A6 | PC-B1 | 4.78 | 3.03 |
| CE-6* | PC-A1 | PC-B1 | - | - |
| CE-7 | PC-A7 | PC-B1 | 7.14 | 1.49 |
| CE-8 | PC-A8 | PC-B1 | 0.51 | 2.07 |
| CE-9 | PC-A3 | PC-B2 | 2.29 | 1.78 |

| | | | | |
|---|---|---|---|---|
| * Sample did not cure, no overlap shear strength results. | | | | |

## Claims

1. A curable precursor of an adhesive composition, wherein the curable precursor comprises
(a) a radically (co)polymerizable compound,
(b) a vanadium compound,
(c) a beta-dicarbonyl compound, and
(d) a quaternary ammonium halide.

2. The curable precursor of claim 1, wherein the curable precursor comprises a first part and a second part, and wherein the first part comprises the radically (co)polymerizable compound, and wherein either
(i) the first part comprises the vanadium compound and the quaternary ammonium halide, and the second part comprises the beta-dicarbonyl compound; or
(ii) the first part comprises the beta-dicarbonyl compound and the second part comprises the vanadium compound and the quaternary ammonium halide.

3. The curable precursor of claim 2, wherein the second part further comprises (e) an initiator for radically (co)polymerizing the radically (co)polymerizable compound.

4. The curable precursor of claim 3, wherein the initiator is an organic peroxide.

5. The curable precursor of any of claims 1 to 4, wherein the radically (co)polymerizable compound comprises a (meth)acrylate.

6. The curable precursor of any of claims 1 to 5, wherein the radically (co)polymerizable compound comprises a (meth)acrylate having a functionality of more than 1.

7. The curable precursor of any of claims 1 to 6, wherein the radically (co)polymerizable compound comprises a (meth)acrylate having a functionality of at least 2.

8. The curable precursor of any of claims 1 to 7, wherein the radically (co)polymerizable compound comprises a (meth)acrylate having a functionality of at least 3.

9. The curable precursor of claim 8, wherein the curable precursor comprises at least 30 percent by weight of the (meth)acrylate having a functionality of at least 3, based on the total weight of the radically (co)polymerizable compound of the curable precursor.

10. The curable precursor of any of claims 1 to 9, wherein the curable precursor comprises at least 0.01 percent by weight of the vanadium compound, based on the total weight of the curable precursor.

11. The curable precursor of any of claims 1 to 10, wherein the beta-dicarbonyl compound is represented by the formula 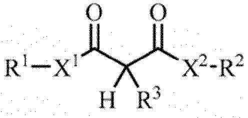 or a salt thereof, wherein:
X¹ and X² independently represent a covalent bond, O, S, 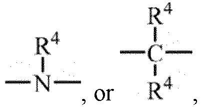
wherein each R⁴ independently represents hydrogen or alkyl having from 1 to 18 carbon atoms,
R¹ and R² independently represent a hydrocarbyl or substituted hydrocarbyl group having from 1 to 18 carbon atoms,
R³ represents hydrogen, or a hydrocarbyl or substituted hydrocarbyl group having from 1 to 18 carbon atoms,
or taken together any two of R¹, R², or R³ form a five-membered or six-membered ring.

12. The curable precursor of claim 11, wherein the beta-dicarbonyl compound comprises a dialkyl 2-acetylsuccinate diester having from 8 to 14 carbon atoms.

13. The curable precursor of any of claims 1 to 12, wherein the vanadium compound comprises vanadyl acetylacetonate.

14. The curable precursor of any of claims 1 to 13, wherein the first part of the curable precursor further comprises a monofunctional (meth)acrylate.

15. A method of curing the curable precursor of an adhesive composition according to any of claims 2 to 14, the method comprising
providing a curable precursor comprising a first part and a second part according to any of claims 2 to 14;
providing a first substrate having a contact surface and a second substrate having a contact surface;
applying the first part of the curable precursor on at least a portion of the contact surface of the first substrate;
applying the second part of the curable precursor on at least a portion of the contact surface of the second substrate; and
contacting the first part of the curable precursor on the contact surface of the first substrate with the second part of the curable precursor on the contact surface of the second substrate, thereby causing curing of the curable precursor of the adhesive composition.

## Patentansprüche

1. Ein härtbarer Vorläufer einer Klebstoffzusammensetzung, wobei der härtbare Vorläufer umfasst
(a) eine radikalisch (co)polymerisierbare Verbindung,
(b) eine Vanadiumverbindung,
(c) eine beta-Dicarbonylverbindung und
(d) ein quartäres Ammoniumhalogenid.

2. Der härtbare Vorläufer nach Anspruch 1, wobei der härtbare Vorläufer einen ersten Teil und einen zweiten Teil umfasst, und wobei der erste Teil die radikalisch (co)polymerisierbare Verbindung umfasst, und wobei entweder
(i) der erste Teil die Vanadiumverbindung und das quaternäre Ammoniumhalogenid umfasst, und der zweite Teil die beta-Dicarbonylverbindung umfasst; oder
(ii) der erste Teil die beta-Dicarbonylverbindung umfasst und der zweite Teil die Vanadiumverbindung und das quartäre Ammoniumhalogenid umfasst.

3. Der härtbare Vorläufer nach Anspruch 2, wobei der zweite Teil ferner umfasst (e) einen Initiator zum radikalischen (Co)polymerisieren der radikalisch (co)polymerisierbaren Verbindung.

4. Der härtbare Vorläufer nach Anspruch 3, wobei der Initiator ein organisches Peroxid ist.

5. Der härtbare Vorläufer nach einem der Ansprüche 1 bis 4, wobei die radikalisch (co)polymerisierbare Verbindung ein (Meth)acrylat umfasst.

6. Der härtbare Vorläufer nach einem der Ansprüche 1 bis 5, wobei die radikalisch (co)polymerisierbare Verbindung ein (Meth)acrylat umfasst, das eine Funktionalität von mehr als 1 aufweist.

7. Der härtbare Vorläufer nach einem der Ansprüche 1 bis 6, wobei die radikalisch (co)polymerisierbare Verbindung ein (Meth)acrylat umfasst, das eine Funktionalität von mindestens 2 aufweist.

8. Der härtbare Vorläufer nach einem der Ansprüche 1 bis 7, wobei die radikalisch (co)polymerisierbare Verbindung ein (Meth)acrylat umfasst, das eine Funktionalität von mindestens 3 aufweist.

9. Der härtbare Vorläufer nach Anspruch 8, wobei der härtbare Vorläufer mindestens 30 Gewichtsprozent des (Meth)acrylats umfasst, das eine Funktionalität von mindestens 3 aufweist, basierend auf dem Gesamtgewicht der radikalisch (co)polymerisierbaren Verbindung des härtbaren Vorläufers.

10. Der härtbare Vorläufer nach einem der Ansprüche 1 bis 9, wobei der härtbare Vorläufer mindestens 0,01 Gewichtsprozent der Vanadiumkomponente umfasst, basierend auf dem Gesamtgewicht des härtbaren Vorläufers.

11. Der härtbare Vorläufer nach einem der Ansprüche 1 bis 10, wobei die beta-Dicarbonylverbindung durch die Formel dargestellt wird 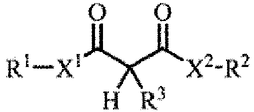
oder ein Salz davon, wobei:
X¹ und X² unabhängig eine kovalente Bindung, O, S, 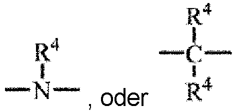 darstellen,
wobei jedes R⁴ unabhängig Wasserstoff oder Alkyl darstellt, das von 1 bis 18 Kohlenstoffatome aufweist,
R¹ und R² unabhängig eine Hydrocarbyl- oder eine substituierte Hydrocarbylgruppe darstellen, die von 1 bis 18 Kohlenstoffatome aufweist,
R³ Wasserstoff oder eine Hydrocarbyl- oder eine substituierte Hydrocarbylgruppe darstellt, die von 1 bis 18 Kohlenstoffatome aufweist,
oder zusammengenommen zwei beliebige von R¹, R² oder R³ einen fünfgliedrigen oder sechsgliedrigen Ring ausbilden.

12. Der härtbare Vorläufer nach Anspruch 11, wobei die beta-Dicarbonylverbindung einen Dialkyl-2-acetylsuccinatdiester umfasst, der von 8 bis 14 Kohlenstoffatome aufweist.

13. Der härtbare Vorläufer nach einem der Ansprüche 1 bis 12, wobei die Vanadiumverbindung Vanadylacetylacetonat umfasst.

14. Der härtbare Vorläufer nach einem der Ansprüche 1 bis 13, wobei der erste Teil des härtbaren Vorläufers ferner ein monofunktionelles (Meth)acrylat umfasst.

15. Verfahren zum Härten des härtbaren Vorläufers einer Klebstoffzusammensetzung nach einem der Ansprüche 2 bis 14, das Verfahren umfassend
Bereitstellen eines härtbaren Vorläufers, umfassend einen ersten Teil und einen zweiten Teil nach einem der Ansprüche 2 bis 14;
Bereitstellen eines ersten Substrats, das eine Kontaktoberfläche aufweist, und eines zweiten Substrats, das eine Kontaktoberfläche aufweist;
Aufbringen des ersten Teils des härtbaren Vorläufers auf mindestens einen Abschnitt der Kontaktoberfläche des ersten Substrats;
Aufbringen des zweiten Teils des härtbaren Vorläufers auf mindestens einen Abschnitt der Kontaktoberfläche des zweiten Substrats; und
Inkontaktbringen des ersten Teils des härtbaren Vorläufers auf der Kontaktoberfläche des ersten Substrats mit dem zweiten Teil des härtbaren Vorläufers auf der Kontaktoberfläche des zweiten Substrats, wodurch das Aushärten des härtbaren Vorläufers der Klebstoffzusammensetzung bewirkt wird.

## Revendications

1. Précurseur durcissable d'une composition adhésive, dans lequel le précurseur durcissable comprend
(a) un composé radicalement (co)polymérisable,
(b) un composé de vanadium,
(c) un composé bêta-dicarbonyle, et
(d) un halogénure d'ammonium quaternaire.

2. Précurseur durcissable selon la revendication 1, dans lequel le précurseur durcissable comprend une première partie et une seconde partie, et dans lequel la première partie comprend le composé radicalement (co)polymérisable, et dans lequel soit
(i) la première partie comprend le composé de vanadium et l'halogénure d'ammonium quaternaire, et la seconde partie comprend le composé bêta-dicarbonyle ; soit
(ii) la première partie comprend le composé bêta-dicarbonyle et la seconde partie comprend le composé de vanadium et l'halogénure d'ammonium quaternaire.

3. Précurseur durcissable selon la revendication 2, dans lequel la seconde partie comprend en outre
(e) un initiateur permettant de (co)polymériser radicalement le composé radicalement (co)polymérisable.

4. Précurseur durcissable selon la revendication 3, dans lequel l'initiateur est un peroxyde organique.

5. Précurseur durcissable selon l'une quelconque des revendications 1 à 4, dans lequel le composé radicalement (co)polymérisable comprend un (méth)acrylate.

6. Précurseur durcissable selon l'une quelconque des revendications 1 à 5, dans lequel le composé radicalement (co)polymérisable comprend un (méth)acrylate ayant une fonctionnalité supérieure à 1.

7. Précurseur durcissable selon l'une quelconque des revendications 1 à 6, dans lequel le composé radicalement (co)polymérisable comprend un (méth)acrylate ayant une fonctionnalité d'au moins 2.

8. Précurseur durcissable selon l'une quelconque des revendications 1 à 7, dans lequel le composé radicalement (co)polymérisable comprend un (méth)acrylate ayant une fonctionnalité d'au moins 3.

9. Précurseur durcissable selon la revendication 8, dans lequel le précurseur durcissable comprend au moins 30 pour cent en poids du (méth)acrylate ayant une fonctionnalité d'au moins 3, sur la base du poids total du composé radicalement (co)polymérisable du précurseur durcissable.

10. Précurseur durcissable selon l'une quelconque des revendications 1 à 9, dans lequel le précurseur durcissable comprend au moins 0,01 pour cent en poids du composé de vanadium, sur la base du poids total du précurseur durcissable.

11. Précurseur durcissable selon l'une quelconque des revendications 1 à 10, dans lequel le composé bêta-dicarbonyle est représenté par la formule 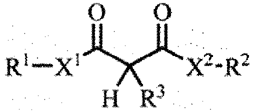 ou un sel de celui-ci, dans lequel :
X¹ et X² représentent indépendamment une liaison covalente, O, S, 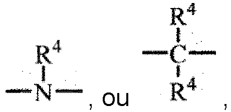
dans lequel chaque R⁴ représente indépendamment hydrogène ou alkyle ayant de 1 à 18 atomes de carbone,
R¹ et R² représentent indépendamment un groupe hydrocarbyle ou hydrocarbyle substitué ayant de 1 à 18 atomes de carbone,
R³ représente hydrogène, ou un groupe hydrocarbyle ou hydrocarbyle substitué ayant de 1 à 18 atomes de carbone,
ou, pris ensemble, deux quelconques de R¹, R², ou R³ forment un cycle à cinq chaînons ou à six chaînons.

12. Précurseur durcissable selon la revendication 11, dans lequel le composé bêta-dicarbonyle comprend un diester de dialkyl-2-acétylsuccinate ayant de 8 à 14 atomes de carbone.

13. Précurseur durcissable selon l'une quelconque des revendications 1 à 12, dans lequel le composé de vanadium comprend l'acétylacétonate de vanadyle.

14. Précurseur durcissable selon l'une quelconque des revendications 1 à 13, dans lequel la première partie du précurseur durcissable comprend en outre un (méth)acrylate monofonctionnel.

15. Procédé de durcissement du précurseur durcissable d'une composition adhésive selon l'une quelconque des revendications 2 à 14, le procédé comprenant
la fourniture d'un précurseur durcissable comprenant une première partie et une seconde partie selon l'une quelconque des revendications 2 à 14 ;
la fourniture d'un premier substrat ayant une surface de contact et d'un second substrat ayant une surface de contact ;
l'application de la première partie du précurseur durcissable sur au moins une partie de la surface de contact du premier substrat ;
l'application de la seconde partie du précurseur durcissable sur au moins une partie de la surface de contact du second substrat ; et
la mise en contact de la première partie du précurseur durcissable sur la surface de contact du premier substrat avec la seconde partie du précurseur durcissable sur la surface de contact du second substrat, permettant ainsi de provoquer le durcissement du précurseur durcissable de la composition adhésive.
